# EUROPEAN PATENT APPLICATION

(11) **EP 4 410 528 A1**
(43) Date of publication of application: **07.08.2024**
(21) Application number: 23154350.5
(22) Date of filing: 31.01.2023
(51) Int. Cl.: B29C 70/54, B29C 70/44, B29C 70/48, B29C 33/02

(54) **APPARATUS AND METHOD FOR PRODUCING A FIBRE REINFORCED COMPOSITE PART**

(71) Applicant: Airbus Operations GmbH, 21129 Hamburg (DE)
(72) Inventor: Seegel, Hauke, 21129 Hamburg (DE); Stolz, Johannes, 21129 Hamburg (DE)

(57) **Abstract**

Disclosed is an apparatus 1' for producing a fibre reinforced composite part. The apparatus 1' comprises a moulding tool 10' forming a mould cavity C configured to accommodate a fibre preform material F. The mould cavity C is connected or configured to be connected to a vacuum and to a supply of heated resin. The apparatus 1' further comprises a heating system 30' for heating the moulding tool 10', and an insulation system comprising one or various chamber/s 50' which each are separated from the mould cavity C and respectively evacuated or evacuable.

Further disclosed is a method for producing a fibre reinforced composite by employing such apparatus 1'.

## Description

The present invention concerns an apparatus designated for producing a fibre reinforced composite part. Moreover, the invention relates to a method for producing a fibre reinforced composite part.

Fibre reinforced composite parts are employed and appreciated for numerous applications. In particular, they provide benefits in the field of lightweight construction of structures such as vehicles, in particular aircrafts, sports equipment or wind turbines, for instance.

To manufacture such components, a fibre material is typically impregnated with a matrix material, and thereafter the merged materials are cured. To realise the impregnation, the fibre material may be placed into a mould and infiltrated therein by the matrix material, such as by means of an out of autoclave composite manufacturing process. In particular, resin transfer moulding (shortly "RTM") is widely used for producing composite parts in high quality and high rates, such as in automotive and aerospace industry, for instance.

A device used for manufacturing composite parts typically comprises a large, massive metallic mould which can have a mass of up to several tons. Basically, such mould consists of two halves configured to in combination enclose a fibre preform material. During the process the mould is heated and maintained at a process temperature; for the production with the epoxy based thermoset matrix materials typically used in aerospace industry, such process temperature is in the range from 100°C to 190°C. The heating can be operated by a heating means which may be integrated in the mould, or it can be done by means of a heated press configured to press the halves together.

Especially in the aerospace sector, in recent years there has been a trend to larger components. For civil and military aircrafts, a temperature of the heated resin injected into the fibre preform material typically is in the range from 100°C to 180°C, and the matrix is cured at 160°C - 190°C.

Heating and maintaining the temperature typically requires high effort in terms of energy and time, especially because of heat radiation at the outer surfaces of tooling and press. Thermal insulation materials may be used for reducing the energy loss. However, after the curing in many cases the tools are cooled down to room temperature which often is mandatory for demoulding, or for preparing the tool for the next process cycle. In case of a large tool, the cooling can take several hours with significant influence on tool occupancy time. The insulation materials then have a negative impact on the cooling times.

It is an object of the present invention to provide an improved apparatus and method for producing a fibre reinforced composite part.

The object is achieved by an apparatus according to claim 1 and a method according to claim 6. Advantageous embodiments are disclosed in the dependent claims, the description and the figures.

An apparatus according to the present invention is designated for producing a fibre reinforced composite part, in particular for being used in an out-of-autoclave composite manufacturing process such as a resin transfer moulding (RTM) process. The fibre reinforced composite part may in particular be a component of an aircraft, such as a component of a hull of an aircraft, for example.

The apparatus comprises a moulding tool forming a mould cavity which is configured to accommodate a fibre preform material. Therein, the fibre preform material may be preformed to a predetermined shape the composite part to be produced is intended to have, or the moulding tool may be configured to give the fibre preform material (which so far may be flat or loose) the intended shape.

The mould cavity of the moulding tool is connected or configured to be connected to a vacuum pump (in particular, to a pump facility comprising a vacuum pump) and to a supply of heated resin. In particular, the moulding tool may form at least one passage for evacuation, a first end of which may open to the mould cavity and a second end of which may be connected or configured to be connected to a pump facility comprising a vacuum pump. Additionally or alternatively, the moulding tool may preferably form at least one passage for resin supply, a first end of which may open to the mould cavity and a second end of which may be connected or configured to be connected to the supply of the heated resin. In such embodiments, if the moulding tool comprises two mould components as detailed below, the passage for evacuation and/or the passage for resin supply may at least partially run between said mould components.

Moreover, the apparatus according to the present invention comprises a heating system for heating (alone or in combination with at least one other means) the moulding tool. Such heating system may comprise one or more resistance wire/s connected or configured to be connected to a current source. Additionally or alternatively, the heating system may comprise a duct system configured to be connected to a heater for supplying heat therefrom to the moulding tool, such as by channelling a fluid heated by the heater. In these cases, the heater may be comprised by the apparatus' heating system.

Furthermore, the apparatus according to the present invention includes a (thermal) insulation system configured to reduce heat loss from the apparatus, in particular from the moulding tool. The insulation system comprises one or more chambers, each of which is separated from the mould cavity, such that, in particular, a gas flow between the respective chamber and the mould cavity is prevented. Moreover, each chamber of the insulation system is evacuated or evacuable (by connection of the respective chamber with a vacuum, in particular a pump facility comprising (at least) a vacuum pump).

As is to be understood, in this document, a chamber is considered as "evacuated" if a pressure within the chamber is lower than that of a standard atmospheric pressure, i.e., if a rough vacuum prevails in the chamber. Analogously, a chamber is considered as "evacuable" if such rough vacuum can be generated within the chamber by connecting it to such vacuum, in particular to a pump facility comprising a vacuum pump.

Additionally or alternatively, the insulation system may comprise at least one chamber in which a pressure lower than 100 Pa (i.e., a medium vacuum) prevails or can be generated, and/or at least one chamber in which a pressure lower than 0.1 Pa (i.e., a high vacuum) prevails or can be generated.

A method according to the present invention serves for producing a fibre reinforced composite component by using an apparatus according to an embodiment of the present invention. The method comprises placing a fibre preform material into the mould cavity of the moulding tool of the apparatus. Thereafter, air is extracted from the mould cavity, and heated resin is supplied into the mould cavity, preferably by carrying out a resin transfer process. Thereby, the fibre preform material is impregnated.

The moulding tool is heated with the heating system of the apparatus (preferably up to a curing temperature and for a curing time). During the heating, the moulding tool is (thermally) insulated by means of the insulation system of the apparatus.

In embodiments of the method employing an apparatus whose insulation system comprises at least one evacuable chamber, the method may include evacuating the at least one evacuable chamber. In particular, such evacuating may be realised by means of a pump facility comprising a vacuum pump. Preferably, the evacuating is processed or at least started before or during the act of heating the moulding tool. If applicable (i.e., if not yet connected), the method may further comprise connecting the at least one evacuable chamber to the pump facility.

The insulation system relying on the evacuation of the chamber/s effectively reduces loss of heat during the utilisation of the apparatus for manufacture of a fibre reinforced composite part, in particular, during the heating and the maintaining of the temperature of the moulding tool. Consequently, the present invention facilitates a reduction of energy consumption, which helps lessen the ecological impact of the process being carried out. Moreover, the chamber/s provide/s a particularly durable insulation means which is almost free of deterioration, but well retains its characteristics even if the apparatus is used frequently and the moulding tool is heated again and again for producing numerous composite parts.

According to advantageous embodiments of the present invention, if the insulation system comprises at least one evacuable chamber, this chamber may be connected or adapted to be connected to a same pump facility (comprising (at least) a vacuum pump) as the mould cavity, such that the pump facility can be used (successively or contemporaneously) both for evacuating the mould cavity and for evacuating the respective chamber. Thereby, the complexity of the apparatus is reduced. According to advantageous embodiments, the apparatus of the present invention comprises such pump facility configured to evacuate the mould cavity and/or at least one chamber of the insulation system.

According to advantages embodiments of the present invention, the moulding tool is at least partially made of metal. It may comprise at least two mould components configured to in combination enclose the mould cavity. In such embodiments, the apparatus may further comprise a press sandwiching the mould components, in particular, a press configured to act on two opposite (preferably parallel) surfaces of the moulding tool, so as to press the at least two mould components together. In embodiments of the method according to the present invention which use such apparatus, the method accordingly may comprise using the press for pressing the at least two components together.

The heating system may be at least partially embedded in the moulding tool; for instance, the above-mentioned resistance wire/s and/or duct system (if present) may run through the moulding tool. Additionally or alternatively, at least a portion of the heating system may be configured to abut on the moulding tool or even be attached to the moulding tool. In particular, if the apparatus comprises a press as mentioned above, at least a portion thereof (such as at least one resistance wire and/or at least a portion of the duct system, if present) may be embedded in the press, in particular run therethrough.

The insulation system in particular may comprise at least one evacuated chamber which is formed as a closed void volume within the moulding tool. In such cases, the evacuation (down to a rough vacuum, a medium vacuum or a high vacuum as mentioned above) can have been carried out during a manufacture of the moulding tool.

Additionally or alternatively, at least one of the one or more chamber/s of the insulation system may be an evacuable chamber which is embedded in the moulding tool, i.e., formed as a cavity within the (possibly monolithic) moulding tool and connected or connectable to a pump facility comprising (at least) a vacuum pump.

Such embedding of the evacuated and/or the evacuable chamber in the moulding tool facilitates a particularly solid apparatus.

Preferably, such embedded (evacuated or evacuable, respectively) chamber is adjacent a surface of the moulding tool. For instance, a distance of the embedded chamber (evacuated or evacuable, respectively) to a surface of the moulding tool may be at most 3cm or at most 2cm. Additionally or alternatively, a distance of such embedded (evacuated or evacuable, respectively) chamber to the mould cavity may preferably be at least the double or four times or seven times or even ten times a distance of the evacuated chamber to a surface of the moulding tool. Consequently, the embedded chamber is relatively close to a surface of the moulding tool, such that a high insulation effect is achieved and an advantageous high temperature can be held in the mould cavity.

Additionally or alternatively, at least one of the one or more chambers of the insulation system may be an evacuated chamber or an evacuable chamber which is formed in a component attached to a surface of the moulding tool. Such apparatus may be manufacturable with particularly few efforts in time and factory equipment.

In cases where at least one of the one or more chamber/s of the insulation system is an evacuable chamber which is connectable or connected to a pump facility as mentioned above, this pump facility may, further to comprising a vacuum pump, also comprise (in particular, be operable as) a pressurising device. Therein, the pressurising device may be adapted to pump a fluid (such as air, another gas, or a liquid such as water) into the chamber/s of the insulation system. The fluid may in particular be tempered. In such embodiments, the respective chamber/s preferably comprise both an ingress for the fluid pumped in, and an outlet for the fluid, such that the pressurising device serves to pump the fluid through the chamber/s.

The pump facility of such apparatus thus is adapted to evacuate the chamber/s in situations where a thermal insulation is advantageous, and to pump a respective fluid into the chamber/s in other situations, e.g., when a curing of a composite part being produced has been finished and/or when the moulding tool is being heated. The moulding tool can thus be actively cooled by a cooling fluid being pumped into (or preferably through) the chamber/s, such that the time needed for cooling down is reduced. Alternatively or additionally, a process of heating the moulding can be fastened by pumping a heating fluid into (or even through) the chamber/s.

A method according to the present invention which employs such apparatus may accordingly comprise pumping a fluid such as a gas (in particular, air) or a liquid (such as water) into (preferably even through) the at least one chamber. In particular, it may comprise pumping a cooling fluid into (in particular, through) the at least one chamber when a curing of the composite part being produced has been finished, and/or pumping a heating fluid into (in particular, through) the at least one chamber when a temperature of the moulding tool is being raised by heating and/or evacuating the chamber when the temperature of the moulding tool is intended to be maintained.

By selectively filling hot or cold fluid into the evacuable chamber (and at a respective filling rate), the temperature of the moulding tool thus can be manipulated, either to heat it during the production of the composite part, or for cooling it, such as after a curing of the resin. By way of such cooling, a faster free standing of the moulding tool can be established, and/or a shorter production cycle can be achieved which may reduce a number of apparatus needed to produce a predetermined amount of composite parts. In particular, the at least one evacuable chamber thus may serve as a heating and/or cooling channel.

According to advantageous embodiments of the present invention, the apparatus further comprises a temperature control system configured to detect a temperature of the moulding tool. The detecting may preferably be done automatically, e.g. repeatedly, such as periodically. In particular, the temperature control system may preferably be configured to monitor the temperature of the moulding tool. A method according to the present invention using such apparatus may accordingly comprise detecting said temperature, e.g. repeatedly (such as periodically), in particular monitoring said temperature.

The temperature control system may further be configured to automatically release the vacuum in the at least one evacuable chamber based (in particular) on a respectively detected temperature. Thereby, in particular a cooling down of the moulding tool can be controlled.

Additionally or alternatively, if the pump facility of the apparatus is adapted to pump a fluid into the at least one evacuable chamber as mentioned above, the temperature control system may further be adapted to control the pump facility (in particular the vacuum pump and/or - if present - a pressurising device comprised by the pump facility) - based (in particular) on a respectively detected temperature; therein, the controlling is preferably further based on a respective manufacturing step, in particular on whether a curing of the composite part respectively being produced is complete. The controlling may comprise setting a respective flow rate of the fluid pumped into (preferably through) the at least one chamber.

A method according to the present invention using such apparatus may accordingly comprise releasing the vacuum in the at least one evacuable chamber by means of the temperature control system and based on a respectively detected temperature, and/or, if the pump facility of the apparatus is adapted to pump a fluid into (or even through) the at least one evacuable chamber apparatus as mentioned above, controlling the pump facility using the temperature control system and based on a respectively detected temperature. Analogous to the above, therein, the controlling is preferably further based on a respective manufacturing step, in particular on whether a curing of the composite part respectively being produced is complete. It may preferably comprise setting a respective flow rate of the fluid pumped into (preferably through) the at least one chamber.

In what follows, a preferred embodiment of the present invention is explained with respect to the accompanying drawings. As is to be understood, the various elements, components and geometrical structures are depicted as examples only, may be facultative and/or combined in a manner different than depicted. Reference signs for related elements are used comprehensively and not defined again for each figure.

Shown is schematically in
- Fig. 1:: an apparatus for producing a fibre reinforced composite part according to the prior art; and
- Fig. 2:: an apparatus for producing a fibre reinforced composite part according to an exemplary embodiment of the present invention.

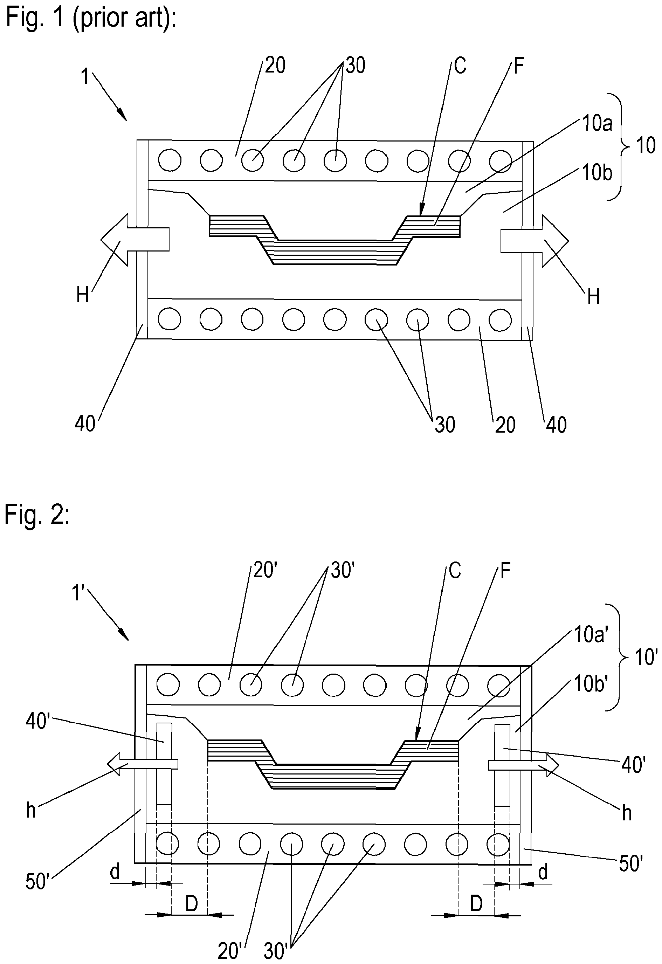

Figure 1 depicts, in a schematic sectional view, an apparatus 1 for producing a composite part according to the prior art. The apparatus 1 comprises a moulding tool 10 forming a mould cavity C which in the situation depicted accommodates a fibre preform material F. In particular, the moulding tool 10 presently comprises two halves 10a, 10b which are separated from each other along the mould cavity C. The moulding tool 10 is sandwiched by a press 20 configured to press the halves 10a, 10b of the moulding tool together, thereby ensuring a tight connection of said halves.

The mould cavity C is connected or configured to be connected to a vacuum pump and to a supply of heated resin (not visible in Figure 1). Lateral elements 40 support two components of the press 20 and thereby ensure a uniform distribution of the pressure force acting on the moulding tool 10. In particular, the press 20 and the lateral elements 40 together frame the moulding tool 10.

In the situation depicted, the fibre preform material F has been infiltrated, e.g. in an RTM process, by a matrix (not visible) and is now being cured by heat applied by means of a heating system 30. The heating system 30 is embedded in the press 20.

As indicated in Figure 1 by respective arrows, heat losses H occur during the heating. The present invention accomplishes to reduce such heat losses by means of an apparatus 1' schematically shown in Figure 2, in a sectional view analogous to that of Figure 1, the apparatus 1' likewise serving for producing a composite part.

Alike the apparatus 1 shown in Figure 1, also the apparatus 1' comprises a moulding tool 10' forming a mould cavity C accommodating, in the situation depicted, a fibre preform material F. The mould cavity C is connected or configured to be connected to a vacuum pump and to a supply of heated resin (not visible in Figure 2).

The moulding tool 10' is sandwiched by a press 20' configured to press two halves 10a', 10b' of the moulding tool 10' together. Thereby, a tight connection of said halves is ensured. Analogously to the apparatus 1 known from the prior art, lateral elements 40' support two components of the press 20' and thereby ensure a uniform distribution of the pressure force acting on the moulding tool 10'. In particular, the press 20' and the lateral elements 40' together frame the moulding tool 10'.

Contrary to the apparatus 1 known from the prior art and shown in Figure 1, the apparatus 1' according to an exemplary embodiment of the present invention comprises an insulation system including (in this case: two) evacuated chambers 50' which each are separated from the mould cavity C. In the exemplary embodiment depicted, the chambers 50' are closed void volumes embedded in the moulding tool 10'; in particular, they may have been arranged in the manufacturing of the moulding tool 10'. Therein, the chambers 50' each are arranged adjacent a respective surface of the moulding tool 10': Preferably, a distance d between each chamber 50' and a surface of the moulding tool 10' may be at most 3cm or at most 2cm.

Moreover, a distance D of each chamber 50' to the moulding cavity C in the present case is at least three times the distance d. Therewith, the embedded chambers 50' each are relatively close to a surface of the moulding tool, such that an advantageous high temperature can be held in the mould cavity: Also Figure 2 shows a situation in which the fibre preform material F has been infiltrated, e.g. in an RTM process, by a matrix (not visible) and is now being cured by being heated with a heating system 30' whichin the present case is embedded in the press 20'.

The heat loss h emerging thereby through the evacuated chambers 50' is significantly reduced in comparison to the heat loss H occurring in the corresponding regions of the conventional apparatus 10.

Disclosed is an apparatus 1' for producing a fibre reinforced composite part. The apparatus 1' comprises a moulding tool 10' forming a mould cavity C configured to accommodate a fibre preform material F. The mould cavity C is connected or configured to be connected to a vacuum and to a supply of heated resin. The apparatus 1' further comprises a heating system 30' for heating the moulding tool 10', and an insulation system comprising one or various chamber/s 50' which each are separated from the mould cavity C and respectively evacuated or evacuable.

Further disclosed is a method for producing a fibre reinforced composite by employing such apparatus 1'.

### Reference

- 1, 1': apparatus for producing a fibre reinforced composite part

- 10, 10': moulding tool
- 10a, 10b, 10a', 10b': halves of moulding tool
- 20, 20': press
- 10, 10': heating system
- 40, 40' 50': evacuated chamber

- C: mould cavity
- d: distance from chamber 50' to surface of moulding tool
- D: distance from chamber 50' to mould cavity C
- F: fibre preform material
- h: heat loss
- H: heat loss

## Claims

1. Apparatus (1') for producing a fibre reinforced composite part, the apparatus comprising
- a moulding tool (10') forming a mould cavity (C) configured to accommodate a fibre preform material (F), the mould cavity (C) connected or configured to be connected to a vacuum pump and to a supply of heated resin, and
- a heating system (30') for heating the moulding tool (10'),
**characterised in that**
the apparatus includes an insulation system comprising one or various chamber/s (50') separated from the mould cavity (C) and respectively being evacuated or evacuable.

2. Apparatus according to claim 1, wherein the insulation system comprises
- at least one evacuated chamber (50') which is formed as a closed void volume within the moulding tool; and/or
- at least one evacuated chamber formed in a component attached to a surface of the moulding tool.

3. Apparatus according to one of claims 1 or 2, wherein the insulation system comprises
- at least one evacuable chamber formed within the moulding tool and connected or connectable to a pump facility comprising a vacuum pump; and/or
- at least one evacuable chamber formed in a component attached to a surface of the tool and connected or connectable to a/the pump facility comprising a vacuum pump.

4. Apparatus according to claim 3, wherein the pump facility further comprises a pressurising device adapted to pump a fluid into the at least one evacuable chamber.

5. Apparatus according to one of claims 3 or 4, the apparatus further comprising a temperature control system configured to detect a temperature of the moulding tool, and
- to automatically release or maintain the vacuum in the at least one evacuable chamber based on a respectively detected temperature and/or
- if the apparatus is in accordance with claim 4, to control the pressurising device based on a respectively detected temperature.

6. Method for producing a fibre reinforced composite component with an apparatus (1') according to one of the preceding claims, the method comprising
- placing a fibre preform material (F) into the mould cavity (C) of the moulding tool (10') of the apparatus,
- extracting air from the mould cavity (C) and supplying heated resin into the mould cavity, thereby impregnating the fibre preform material (F);
- heating the moulding tool (10') with the heating system (30') of the apparatus; and
- insulating the moulding tool (10') during the heating by means of the insulation system of the apparatus.

7. Method according to claim 6, wherein the apparatus is in accordance with claim 3, and the method further comprises evacuating the at least one evacuable chamber.

8. Method according to one of claims 6 or 7, wherein the apparatus is in accordance with claim 4 and the method further comprises filling the at least one evacuable chamber with a fluid.

9. Method according to one of claims 7 or 8, wherein the apparatus is in accordance with claim 5, and the method comprises
- releasing the vacuum in the at least one evacuable chamber and/or
- if the apparatus is in accordance with claim 4, controlling the pressurising device based on a respectively detected temperature.
